# EUROPÄISCHE PATENTSCHRIFT

(11) **EP 1 621 325 B1**
(45) Veröffentlichungstag und Bekanntmachung des Hinweises auf die Patenterteilung: **08.10.2008**
(21) Anmeldenummer: 05105032.6
(22) Anmeldetag: 09.06.2005
(51) Int. Cl.: B29C 73/16, B29D 30/00, B60C 17/02

(54) **Vorrichtung zum Abdichten von Reifen**
Device for sealing tires
Dispositif pour étancher des pneus

(30) Priorität: 29.07.2004 DE 102004036917
(43) Veröffentlichungstag der Anmeldung: 01.02.2006
(73) Patentinhaber: Continental Aktiengesellschaft, 30165 Hannover (DE)
(72) Erfinder: Ernst, Gerhard, Dr., 30629 Hannover (DE); Bauhus, Andreas, 31535 Neustadt (DE); Detering, Rainer, 30926 Seelze (DE); Gerlach, Markus, 31073 Grünenplan (DE); Rubba, Heiko, 31303 Burgdorf (DE)

(56) Entgegenhaltungen:
- EP-A- 1 219 874
- EP-A- 1 419 876
- DE-A1- 19 846 451
- PATENT ABSTRACTS OF JAPAN Bd. 2002, Nr. 08, 5. August 2002 (2002-08-05) & JP 2002 104424 A (YOSHINO KOGYOSHO CO LTD), 10. April 2002 (2002-04-10)

## Beschreibung

### Vorrichtung zum Abdichten von Reifen

Die Erfindung betrifft eine Vorrichtung zum Abdichten aufblasbarer Gegenstände, insbesondere Reifen, mit einem ein Abdichtmittel enthaltenden Behälter, der über eine erste Druckluftleitung mit einer Gasdruckquelle und über ein Ende einer zweiten Druckluftleitung an einen abzudichtenden Gegenstand anschließbar ist, wobei die erste Druckluftleitung und die zweite Druckluftleitung über den Behälterinnenraum miteinander in Verbindung stehen.

Derartige Vorrichtungen zum Abdichten von Reifen sind seit langem z. B. aus der DE 195 45 935 A1, der DE 198 46 451 A1 und der WO 02/066236 A1 bekannt. Das Abdichtmittel, das in einer derartigen Vorrichtung zum Abdichten der Reifen verwendet wird, beruht im Allgemeinen auf Naturkautschuk-Latexabmischungen. Das Dichtmittel wird in einem zeitaufwändigen Prozess hergestellt, um Verunreinigungen in dem Dichtmittel zu minimieren. Dadurch kann weitestgehend sichergestellt werden, dass das Dichtmittel, das mit Hilfe der Vorrichtung über die zweite Druckluftleitung und über das Reifenventil in den Reifen überführt wird, das Reifenventil nicht frühzeitig verstopft und somit ein weiteres Überfähren von Dichtmittel und ein Aufblasen des Reifens unmöglich wird. Es ist jedoch festzustellen, dass der aufwändige Herstellungsprozess des Dichtmittels einen hohen Zeit- und Kostenaufwand erfordert.

Der Erfindung liegt die Aufgabe zugrunde, eine Vorrichtung zum Abdichten von aufblasbaren Gegenständen, insbesondere Reifen zu schaffen, bei der ein Dichtmittel verwendbar ist, das mit geringem Aufwand herzustellen ist.

Gemäß dem kennzeichnenden Merkmal des Anspruchs 1 wird die Aufgabe dadurch gelöst, dass die Vorrichtung ein Filterelement enthält, durch das das Dichtmittel fließt, bevor es aus dem Ende der zweiten Druckluftleitung austritt.

Der mit der Erfindung erzielte Vorteil ist insbesondere darin zu sehen, dass die Vorrichtung mit einem Dichtmittel betrieben werden kann, das auf einfache Art und Weise herstellbar ist. Dies ist darauf zurückzuführen, dass bei der Herstellung des Dichtmittels auf Verunreinigungen im Dichtmittel nur noch in einem erheblich geringeren Umfang als früher geachtet zu werden braucht, da Verunreinigungen in dem Dichtmittel bei einer Anwendung der Vorrichtung durch das Filterelement entweder zurückgehalten oder zerkleinert werden. Somit ist der Gefahr wirksam vorgebeugt, dass die in dem Dichtmittel enthaltenen Verunreinigungen das Reifenventil frühzeitig verstopfen. Ein weiterer Vorteil der Erfindung ist darin zu sehen, dass die übrigen Bestandteile der Vorrichtung nicht verändert zu werden brauchen (es ist z. B. keine Gasdruckquelle in Form eines Kompressors notwendig, der eine höhere Leistung aufweist, um die Verunreinigungen in dem Dichtmittel durch das Filterelement zu drücken). Hierdurch wird es möglich, bereits im Einsatz befindliche Vorrichtungen mit einem Filterelement nachzurüsten und in Zukunft auf kostengünstige Dichtmittel umzustellen.

Das Filterelement kann an sich an beliebiger Stelle zwischen dem Ausgang des Behälterinnenraums und dem Ende der zweiten Druckluftleitung (bzw. dem Übergang in den Reifeninnenraum) angeordnet sein, z.B. im Flaschenhals des Behälters. Ferner ist es möglich, das Filterelement in einen Adapter einzubringen, durch den die zweite Druckluftleitung verlängert wird und der dann Bestandteil der zweiten Druckluftleitung ist. Es ist ebenfalls möglich, das Filterelement in das Reifenventil einzubringen, das dann im Sinne der Erfindung zum Bestandteil der zweiten Druckluftleitung wird. Gemäß einer bevorzugten Weiterbildung der Erfindung nach Anspruch 2 deckt das Filterelement jedoch zumindest den Fließquerschnitt der zweiten Druckluftleitung ab. Der Vorteil dieser Weiterbildung ist darin zu sehen, dass das Filterelement in der zweiten Druckluftleitung einfach und gleichzeitig wirkungsvoll angebracht werden kann.

Gemäß einer Weiterbildung der Erfindung nach Anspruch 3 enthält die erste Druckluftleitung ein Gaseinlasselement und die zweite Druckluftleitung ein Gasauslasselement, an das ein Druckluftschlauch anschließbar ist, wobei die Elemente über den Behälterinnenraum miteinander in Verbindung stehen. Der Vorteil dieser Weiterbildung ist darin zu sehen, dass das Gaseinlasselement und das Gasauslasselement an ihrem einen Ende auf besonders einfache Art und Weise mit Druckluftschläuchen verbindbar sind und an ihrem jeweiligen anderen Ende auf besonders einfache Art und Weise über den Behälterinnenraum miteinander in Verbindung gebracht werden können.

Gemäß einer Weiterbildung nach Anspruch 4 sind das Gaseinlasselement und das Gasauslasselement Bestandteile einer Entnahmeeinheit, die mit dem Dichtmittelbehälter lösbar verbindbar ist. EinVorteil dieser Weiterbildung ist darin zu sehen, dass der Dichtmittelbehälter getrennt von der Entnahmeeinheit gelagert werden kann. Ein weiterer Vorteil dieser Weiterbildung ist darin zu sehen, dass nach einer Entleerung eines alten Dichtmittelbehälters dieser von der Entnahmeeinheit gelöst und ein neuer Dichtmittelbehälter mit der Entnahmeeinheit verbunden werden kann. Vorzugsweise werden die Dichtmittelbehälter an der Entnahmeeinheit verschraubt.

Gemäß einer Weiterbildung der Erfindung nach Anspruch 5 deckt zumindest ein Teil des Filterelementes den Fließquerschnitt des Gasauslasselementes ab. Der Vorteil dieser Weiterbildung ist darin zu sehen, dass das Fileterelement auf besonders einfache Art und Weise in dem Fließquerschnitt des Gasauslasselementes eingebracht werden kann.

Gemäß einer Weiterbildung der Erfindung nach Anspruch 6 verlaufen des Gaseinlasselement und das Gasauslasselement an ihren dem Dichtmittelbehälter zugewandeten Enden koaxial. Ein Vorteil dieser Weiterbildung ist darin zu sehen, dass das Gaseinlasselement und das Gasauslasselement besonders raumsparend in einer kleinen Entnahmeeinheit angeordnet werden können. Weitere Vorteile dieser Weiterbildung werden im Zusammenhang mit den Weiterbildungen gemäß den Ansprüchen 7 und 8 deutlich.

Gemäß einer Weiterbildung der Erfindung nach Anspruch 7 ist das Filterelement im Bereich der o.g. Enden von Gaseinlasselement und Gasauslasselement angeordnet und als Ringscheibe ausgebildet, die auf das Ende des Gaseinlasselementes geschoben ist und den Fließquerschnitt des Endes des Gasauslasselementes abdeckt. Ein Vorteil dieser Weiterbildung ist darin zu sehen, dass das Filterelement auf besonders einfache Art und Weise in den Fließquerschnitt des Endes des Gasauslasselementes eingebracht werden kann.

Gemäß einer Weiterbildung der Erfindung nach Anspruch 8 ist das Filterelement im Bereich der Enden des Gaseinlasselementes und des Gasauslasselementes angeordnet und als Becher ausgebildet, der auf das Ende des Gaseinlasselementes geschoben ist und den Fließquerschnitt der Enden von Gaseinlasselement und Gasauslasselement abdeckt. Die Weiterbildung gemäß Anspruch 8 weist die gleichen Vorteile auf wie die Weiterbildung gemäß Anspruch 7. Darüber hinaus wird durch die Weiterbildung gemäß Anspruch 8 der Vorteil erreicht, dass das Filterelement im Bereich des Endes des Gasauslasselementes durch entsprechende Ausbildung des Bechers einen großen Wirkungsquerschnitt aufweist, so dass mit Hilfe des Filterelementes besonders wirkungsvoll Verunreinigungen zurückgehalten werden können. Anstelle eines Bechers kann auch eine Röhre verwendet werden, mit der der Fließquerschnitt des Endes des Gasauslasselement abgedeckt wird.

Gemäß einer Weiterbildung der Erfindung nach Anspruch 9 ist das Filterelement als Sieb ausgebildet. Der Vorteil dieser Weiterbildung ist darin zu sehen, dass ein Sieb einfach, z.B. aus Kunststoff in Spritzgußtechnik, hergestellt werden kann.

Gemäß einer Weiterbildung der Erfindung nach Anspruch 10 weist das Sieb eine Maschenweite zwischen 50µm und 1,5 mm, vorzugsweise zwischen 150 µm und 1 mm, auf. Der Vorteil dieser Weiterbildung ist darin zu sehen, dass mit einem derartigen Sieb einerseits große Verunreinigungen wirkungsvoll zurückgehalten werden können und andererseits kleinere Verunreinigungen durch das Sieb wirkungsvoll zerkleinert werden können. Somit ist sichergestellt, dass die zerkleinerten Verunreinigungen das Reifenventil im Anwendungsfall der Vorrichtung nicht verstopfen.

Gemäß einer Weiterbildung der Erfindung nach Anspruch 11 besteht das Filterelement aus korrosionsbeständigem Material. Vorzugsweise besteht es aus korrosionsbeständigem Metall oder aus Kunststoff. Der Vorteil dieser Weiterbildung ist darin zu sehen, dass das Filterelement durch Korrosion nicht beschädigt werden kann und somit über einen langen Zeitraum seine Funktion aufrechterhalten bleibt.

Ein Ausführungsbeispiel und weitere Vorteile der Erfindung werden im Zusammenhang mit den nachstehenden Figuren erläutert, darin zeigt:
- Fig. 1: eine Vorrichtung zum Abdichten eines Reifens in schematischer Darstellung,
- Fig. 2: eine Entnahmeeinheit im Querschnitt,
- Fig. 3: ein Sieb
- Fig. 4: eine Entnahmeeinheit im Querschnitt
- Fig. 5: ein Sieb.

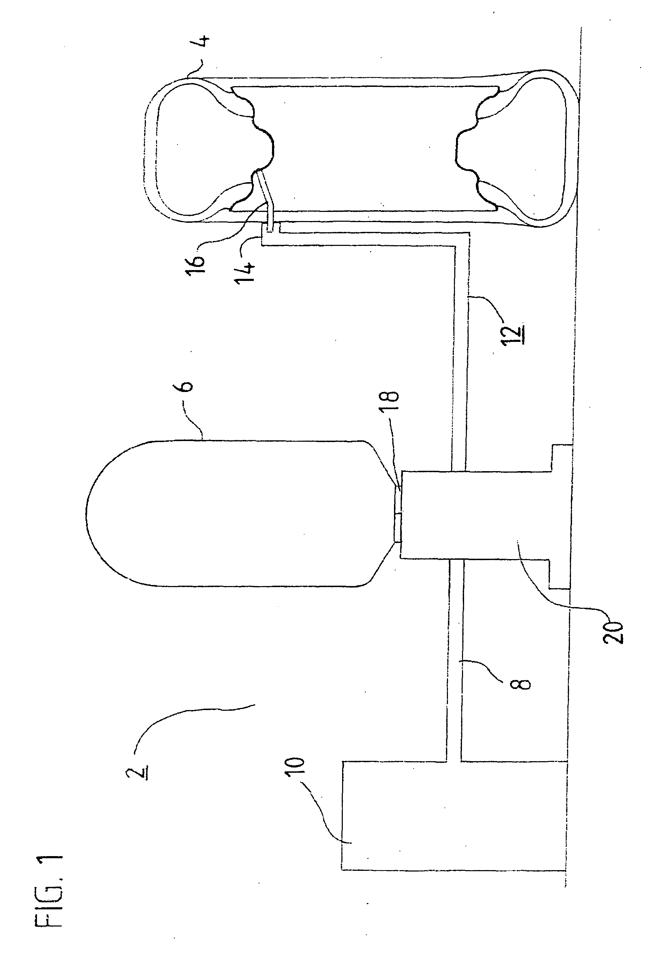

Figur 1 zeigt eine Vorrichtung 2 zum Abdichten von Reifen 4. Die Vorrichtung enthält einen ein Abdichtmittel enthaltenden Behälter 6, der über eine erste Druckluftleitung 8 mit einer Gasdruckquelle in Form eines Kompressors 10 verbunden ist. Ferner weist die Vorrichtung eine zweite Druckluftleitung 12 auf, deren eines Ende mit dem Behälter 6 verbunden ist und deren anderes Ende 14 an das Reifenventil 16 angeschlossen werden kann. Die erste Druckluftleitung 8 und die zweite Druckluftleitung 12 enden in einer Entnahmeeinheit 20, die mit dem Behälter 6 verbunden ist, und stehen über den Innenraum des Behälters 6 miteinander in Verbindung. Eine derartige Vorrichtung 2 wird in an sich bekannter Art und Weise wie folgt genutzt: Mit Hilfe des Kompressors 10 wird Druckluft über die erste Druckluftleitung 8 in den Innenraum des Behälters 6 überführt. Ausgehend von dem Innenraum des Behälters 6 wird ein Gemisch aus Druckluft und Abdichtmittel über die zweite Druckluftleitung 12 und das Reifenventil 16 in den Innenraum des Reifens 4 überführt. Auf diese Art und Weise kann ein beschädigter Reifen 4 mit dem Dichtmittel abgedichtet und gleichzeitig aufgepumpt werden.

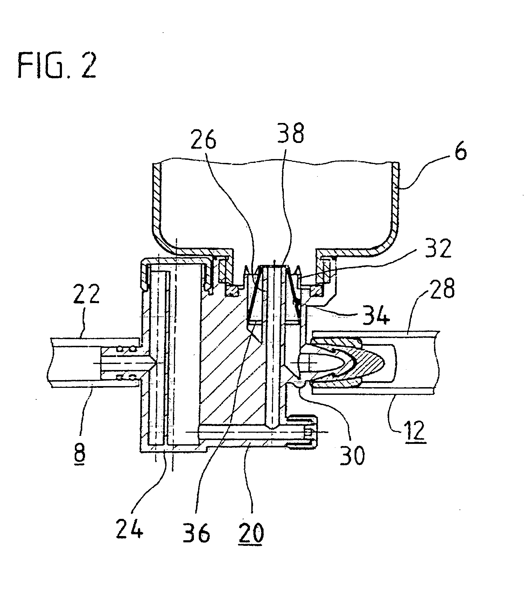

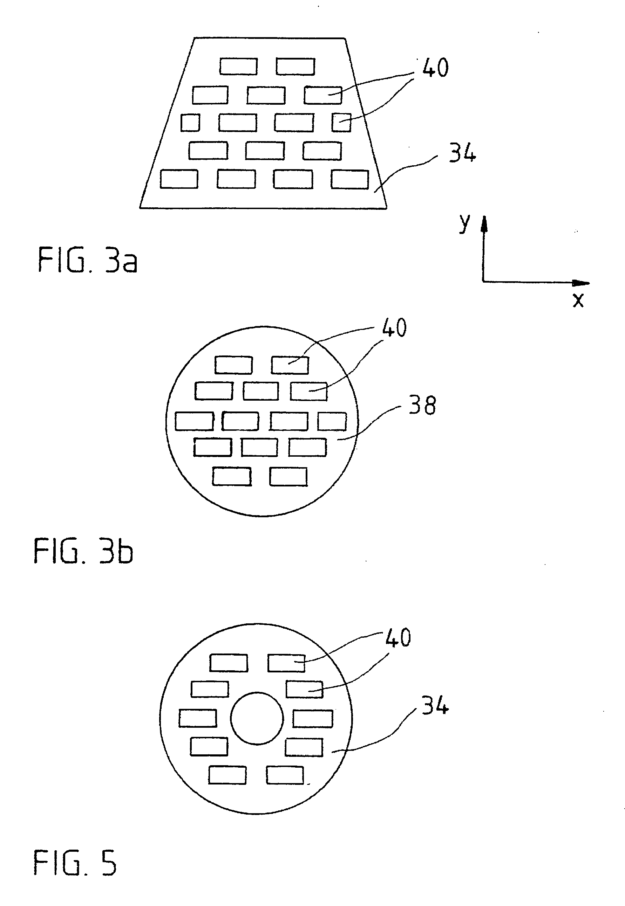

Die Vorrichtung 2 enthält über die bisher genannten Bestandteile hinaus ein (in der Figur 1 nicht gezeigtes) Filterelement, durch das das in dem Behälter 6 befindliche Dichtmittel fließt, bevor es aus dem Ende 14 der zweiten Druckluftleitung in das Reifenventil 16 und von dort in den Reifen 4 austritt. Das Filterelement kann an beliebiger Stelle in den Dichtmittelfluss eingebracht werden (z. B. in den Flaschenhals 18 des Behälters 6). Bevorzugt wird das Filterelement jedoch derart in die Vorrichtung 2 eingebracht, dass es zumindest den Fließquerschnitt der zweiten Druckluftleitung 12 weitestgehend abdeckt (Näheres s. Figuren 2 und 3).

Figur 2 zeigt eine Entnahmeeinheit 20 im Querschnitt. Die erste Druckluftleitung 8, die auf den Kompressor 10 geführt wird (s. Figur 1) besteht aus einem ersten Druckluftschlauch 22 und einem Gaseinlasselement 24, das Bestandteil der Entnahmeeinheit 20 ist. An einem Ende des Gaseinlasselementes 24 ist der erste Druckluftschlauch 22 befestigt. Das andere Ende 26 des Gaseinlasselementes 24 ist dem Innenraum des Behälters 6 zugewandt.

Die zweite Druckluftleitung 12 besteht aus einem zweiten Druckluftschlauch 28, und einem Gasauslasselement 30, das ebenfalls Bestandteil der Entnahmeeinheit 20 ist. Der zweite Druckluftschlauch 28 ist an einem Ende an das Gasauslasselement 30 angeschlossen und das andere Ende wird der auf das Reifenventil 16 geführt wird (s. Figur 1). Das Ende 32 des Gasauslasselementes 30 ist dem Innenraum des Behälters 6 zugewandt. Die Enden 26 und 32, die dem Innenraum des Behälters 6 zugewandt sind, sind koaxial zueinander angeordnet, wobei das Ende 26 des Gaseinlasselementes von dem Ende 32 des Gasauslasselementes koaxial umfasst wird.

Bei einer Anwendung der Vorrichtung 2 (s. Figur 1) wird die von dem Kompressor 10 gelieferte Druckluft über das Gaseinlasselement 24 in den Innenraum des Behälters 6 geführt, und ein Gemisch aus Abdichtmittel und Druckluft über das Gasauslasselement 30 und den zweiten Druckluftschlauch 28 in den Reifen 4 überführt.

Das Gemisch aus Druckluft und Abdichtmittel, welches durch die zweite Druckluftleitung 12 in den Reifen 4 geführt wird, wird durch ein Filterelement 34 geführt, das den Fließquerschnitt der zweiten Druckluftleitung 12 zumindest weitgehend abdeckt. Hierzu ist das Filterelement 34 bei dem in der Figur 2 gezeigten Ausführungsbeispiel als Becher 34 ausgebildet. Dieser Becher 34 wird mit seiner Öffnung 36 nach unten derart auf das Ende 26 des Gaseinlasselementes 24 aufgesetzt, dass der Boden 38 des Bechers 34 die Austrittsöffnung am Ende 26 des Gaseinlasselementes 24 abdeckt. Die lichte Öffnung 36 des Bechers 34 entspricht in ihrer Größe in etwa dem Fließquerschnitt am Ende 32 des Gasauslasselementes 30, das dem Innenraum des Behälters 6 zugewandt ist. Hierdurch wird erreicht, dass im Bereich der Öffnung 36 die Seitenwand des Bechers 34 an der Innenwand des Endes 32 des Gasauslasselementes anliegt, so dass die Seitenwand des Bechers 34 den Fließquerschnitt des Gasauslasselementes 30 wirksam abdeckt.

Figur 3 zeigt das in der Figur 2 im Querschnitt gezeigte Filterelement 34 in Form eines Bechers 34 im Detail. Der Becher 34 besteht aus korrosionsbeständigem Material und kann z. B. aus Kunststoff in Spritzgusstechnik hergestellt werden. Der Becher 34 enthält in seiner Seitenwand (s. Figur 3a) und in seinem Boden 38 (s. Figur 3b) Durchbrechungen 40, so dass der Becher 34 als Sieb 34 ausgebildet. Die lichte Breite der Durchbrechungen 40 liegt sowohl in der X- als auch in der Y-Richtung (s. Koordinatenkreuz neben den Figuren 3a und 3b) zwischen 50 µm und 1,5 mm, vorzugsweise zwischen 150 µm und 500 µm.

Es ist ebenfalls möglich, bei dem in der Figur 3 gezeigten Filterelement 34 auf den Boden 38 zu verzichten, so dass das Filterelement 34 die Form einer Röhre mit einer konisch verlaufenden Seitenwand aufweist.

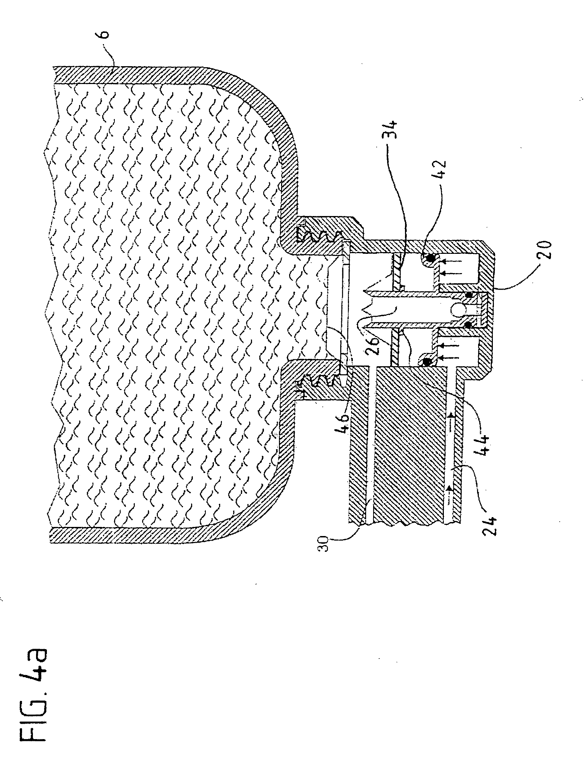

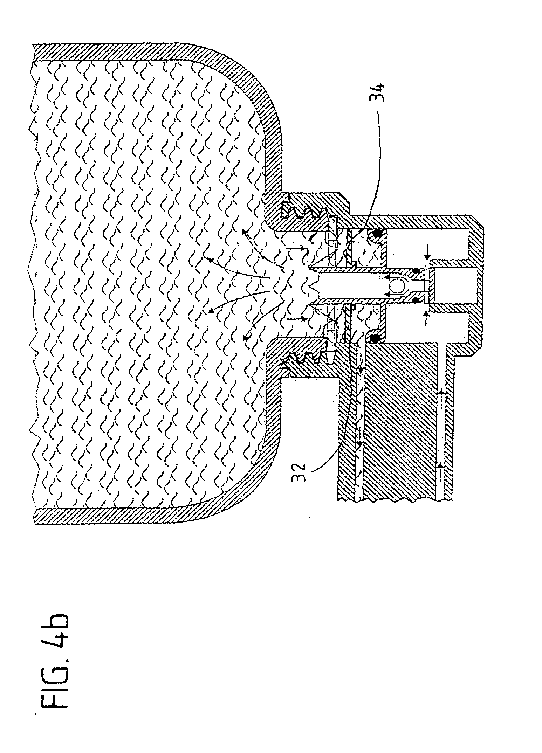

Figur 4 zeigt eine Entnahmeeinheit 20, die bereits aus der WO 02/066 236 A1 bekannt ist dort ausführlich beschrieben wird. Bezüglich der Funktionsweise dieser Entnahmeeinheit 20 an sich wird daher auf diese Druckschrift verwiesen. Die Entnahmeeinheit 20 mit ihrem Gaseinlasselement 24 und ihrem Gasauslasselement 30 weist einen Kolben 42 auf. In dem Kolben 42 ist das dem Behälter 6 zugewandte Ende 26 des Gaseinlasselementes 24 integriert. Der Kolben 42 enthält an dem Ende 26 einen ringförmigen Kragen 44, auf dem sich ein ringförmiges Filterelement in Form eines Siebes 34 abstützt, das auf das Ende 26 des Gaseinlasselementes 24 aufgeschoben ist

Die Funktionsweise der Entnahmeeinheit 20 ist wie folgt: Mit Hilfe eines (in der Figur 4a nicht gezeigten) Kompressors wird durch das Gaseinlasselement 24 Druckluft unter den Kolben 42 geführt, der sich daraufhin nach oben bewegt, wie es in der Figur 4b gezeigt ist. Bei dieser Bewegung wird das Sieb 34 nach oben mitgenommen, da es sich auf dem ringförmigen Kragen 44 des Kolbens 42 abstützt. Infolge der Bewegung nach oben durchsticht das obere Ende des Kolbens 42 das Siegel 46 des Behälters 6. Ferner gelangt die von dem Kompressor gelieferte Druckluft durch das obere Ende 26 des Gaseinlasselementes 24 in den Innenraum des Behälters 6, so wie es auch durch die Zeile in der Figur 4b angedeutet ist.

Aus dem Behälter 6 fließt ein Gemisch aus Abdichtmittel und Druckluft über den Ringkanal 32, der das obere Ende 32 des Gasauslasselementes 30 bildet, in das Gasauslasselement 30 und von dort (über einen nicht gezeigten) Druckluftschlauch in einen abzudichtenden Reifen 4 (s. Figur 1). Das obere Ende 32 des Gasauslasselementes 30 umfasst das obere Ende 26 des Gaseinlasselementes 24 koaxial. Das Sieb 34 liegt in der Position des Kolbens 42, die in der Figur 4b gezeigt ist, derart in dem oberen Ende 32 des Gasauslasselementes 30, dass es dessen Fließquerschnitt zumindest weitestgehend abdeckt. Das Gemisch aus Abdichtmittel und Druckluft aus dem Innenraum des Behälters 6 fließt also zunächst durch das Sieb 34, bevor es in den abzudichtenden Reifen überführt wird.

Figur 5 zeigt das in den Figuren 4a und 4b gezeigte Sieb 34 in Draufsicht. Das Sieb 34 weist die Form einer Ringscheibe auf, die aus korrosionsbeständigem Metall oder Kunststoff bestehen kann. Das Sieb 34 enthält Durchbrechungen 40, die die gleiche Größe aufweisen, wie es bereits im Zusammenhang mit der Figur 3 erläutert worden ist.

### Bezugszeichenliste

### (Teil der Beschreibung)

- 2: Vorrichtung
- 4: Reifen
- 6: Behälter
- 8: erste Druckluftleitung
- 10: Kompressor
- 12: zweite Druckluftleitung
- 14: Ende der zweiten Druckluftleitung
- 16: Reifenventil
- 18: Flaschenhals
- 20: Entnahmeeinheit
- 22: erster Druckluftschlauch
- 24: Gaseinlasselement
- 26: Ende des Gaseinlasselementes
- 28: zweiter Druckluftschlauch
- 30: Gasauslasselement
- 32: Ende des Gasauslasselementes
- 34: Filterelement
- 36: Öffnung
- 38: Boden
- 40: Durchbrechungen
- 42: Kolben
- 44: Kragen
- 46: Siegel

## Patentansprüche

1. Vorrichtung (2) zum Abdichten aufblasbarer Gegenstände, insbesondere Reifen (4), mit einem ein Abdichtmittel enthaltenden Behälter (6), der über eine erste Druckluftleitung (8) mit einer Gasdruckquelle (10) und über ein Ende (14) einer zweiten Druckluftleitung (12) an einen abzudichtenden Gegenstand anschließbar ist, wobei die erste Druckluftleitung (8) und die zweite Druckluftleitung (12) über den Behälterinnenraum miteinander in Verbindung stehen, **dadurch gekennzeichnet, dass** die Vorrichtung (2) ein Filterelement (34) enthält, durch das das Dichtmittel fließt, bevor es aus dem Ende (14) der zweiten Druckluftleitung (12) austritt.

2. Vorrichtung (2) nach Anspruch 1, **dadurch gekennzeichnet, dass** das Filterelement (34) zumindest den Fließquerschnitt der zweiten Druckluftleitung (12) zumindest weitestgehend abdeckt.

3. Vorrichtung (2) nach einem der Ansprüche 1, **dadurch gekennzeichnet, dass** die erste Druckluftleitung (8) ein Gaseinlasselement (24) und die zweite Druckluftleitung (12) ein Gasauslasselement (30), an das ein Druckluftschlauch (28) anschließbar ist, enthält, wobei die Elemente (24, 30) über den Behälterinnenraum miteinander in Verbindung stehen.

4. Vorrichtung (2) nach Anspruch 3, **dadurch gekennzeichnet, dass** das Gaseinlasselement (24) und das Gasauslasselement (30) Bestandteile einer Entnahmeeinheit (20) sind, die mit dem Behälter (6) lösbar verbindbar ist.

5. Vorrichtung (2) nach einem der Ansprüche 3 bis 4, **dadurch gekennzeichnet, dass** zumindest ein Teil des Filterelementes (34) den Fließquerschnitt des Gasauslasselementes (30) abdeckt.

6. Vorrichtung (2) nach einem der Ansprüche 3 bis 5, **dadurch gekennzeichnet, dass** das Gaseinlasselement (24) und das Gasauslasselement (30) an ihren dem Behälter (6) zugewandten Enden (26, 32) koaxial verlaufen.

7. Vorrichtung (2) nach Anspruch 6, **dadurch gekennzeichnet, dass** das Filterelement (34) im Bereich der Enden (26, 32) angeordnet ist und als Ringscheibe (34) ausgebildet ist, die auf den das Ende (26) des Gaseinlasselementes (24) geschoben ist und den Fließquerschnitt des Endes (32) des Gasauslasselementes (30) zumindest weitestgehend abdeckt.

8. Vorrichtung (2) nach Anspruch 6, **dadurch gekennzeichnet, dass** das Filterelement (34) im Bereich der Enden (26, 32) angeordnet ist und als Becher (34) ausgebildet ist, der auf das Ende (26) des Gaseinlasselementes (24) geschoben ist und den Fließquerschnitt der Enden (26, 32) abdeckt.

9. Vorrichtung (2) nach einem der Ansprüche 1 bis 8, **dadurch gekennzeichnet, dass** das Filterelement (34) als Sieb (34) ausgebildet ist.

10. Vorrichtung (2) nach Anspruch 9, **dadurch gekennzeichnet, dass** das Sieb (34) eine Maschenweite zwischen 50 um und 1,5 mm aufweist.

11. Vorrichtung (2) nach einem der Ansprüche 1 bis 10, **dadurch gekennzeichnet, dass** das Filterelement (34) aus korrosionsbeständigem Material besteht.

## Claims

1. Device (2) for sealing inflatable articles, in particular tyres (4), comprising a container (6), which contains a sealant and can be connected via a first compressed air line (8) to a gas pressure source (10) and via an end (14) of a second compressed air line (12) to an article to be sealed, the first compressed air line (8) and the second compressed air line (12) being in connection with each other via the interior space of the container, **characterized in that** the device (2) includes a filter element (34), through which the sealant flows before it emerges from the end (14) of the second compressed air line (12).

2. Device (2) according to Claim 1, **characterized in that** the filter element (34) covers at least the flow cross section of the second compressed air line (12), at least to a great extent.

3. Device (2) according to either of Claims 1 and 2, **characterized in that** the first compressed air line (8) includes a gas inlet element (24) and the second compressed air line (12) includes a gas outlet element (30), to which a compressed air hose (28) can be connected, the elements (24, 30) being in connection with each other via the interior space of the container.

4. Device (2) according to Claim 3, **characterized in that** the gas inlet element (24) and the gas outlet element (30) are component parts of a removal unit (20), which can be releasably connected to the container (6).

5. Device (2) according to either of Claims 3 and 4, **characterized in that** at least part of the filter element (34) covers the flow cross section of the gas outlet element (30).

6. Device (2) according to one of Claims 3 to 5, **characterized in that** the gas inlet element (24) and the gas outlet element (30) run coaxially at their ends (26, 32) facing the container (6).

7. Device (2) according to Claim 6, **characterized in that** the filter element (34) is arranged in the region of the ends (26, 32) and is formed as an annular disc (34), which is pushed onto the end (26) of the gas inlet element (24) and covers the flow cross section of the end (32) of the gas outlet element (30), at least to a great extent.

8. Device (2) according to Claim 6, **characterized in that** the filter element (34) is arranged in the region of the ends (26, 32) and is formed as a cup (34), which is pushed onto the end (26) of the gas inlet element (24) and covers the flow cross section of the ends (26, 32).

9. Device (2) according to one of Claims 1 to 8, **characterized in that** the filter element (34) is formed as a screen (34).

10. Device (2) according to Claim 9, **characterized in that** the screen (34) has a mesh width of between 50 µm and 1.5 mm.

11. Device (2) according to one of Claims 1 to 10, **characterized in that** the filter element (34) consists of corrosion-resistant material.

## Revendications

1. Dispositif (2) pour étancher des objets gonflables, notamment des pneus (4), comprenant un récipient (6) contenant un agent d'étanchéité, qui peut être raccordé par le biais d'une première conduite d'air sous pression (8) avec une source de pression de gaz (10) et par le biais d'une extrémité (14) d'une deuxième conduite d'air sous pression (12) à un objet à étancher, la première conduite d'air sous pression (8) et la deuxième conduite d'air sous pression (12) étant en liaison l'une avec l'autre par le biais de l'espace interne du récipient, **caractérisé en ce que** le dispositif (2) contient un élément de filtre (34) à travers lequel s'écoule l'agent d'étanchéité, avant qu'il ne ressorte par l'extrémité (14) de la deuxième conduite d'air sous pression (12).

2. Dispositif (2) selon la revendication 1,
**caractérisé en ce que** l'élément de filtre (34) recouvre au moins sensiblement au moins la section transversale d'écoulement de la deuxième conduite d'air sous pression (12).

3. Dispositif (2) selon l'une quelconque des revendications 1 ou 2, **caractérisé en ce que** la première conduite d'air sous pression (8) contient un élément d'entrée de gaz (24) et la deuxième conduite d'air sous pression (12) contient un élément de sortie de gaz (30) auquel peut se raccorder un tuyau d'air sous pression (28), les éléments (24, 30) étant en liaison l'un avec l'autre par le biais de l'espace interne du récipient.

4. Dispositif (2) selon la revendication 3, **caractérisé en ce que** l'élément d'entrée de gaz (24) et l'élément de sortie de gaz (30) sont des constituants d'une unité de prélèvement (20) qui peut être connectée de manière détachable au récipient (6).

5. Dispositif (2) selon l'une quelconque des revendications 3 à 4, **caractérisé en ce qu'**au moins une partie de l'élément de filtre (34) recouvre la section transversale d'écoulement de l'élément de sortie de gaz (30).

6. Dispositif (2) selon l'une quelconque des revendications 3 à 5, **caractérisé en ce que** l'élément d'entrée de gaz (24) et l'élément de sortie de gaz (30) s'étendent coaxialement au niveau de leurs extrémités (26, 32) tournées vers le récipient (6).

7. Dispositif (2) selon la revendication 6, **caractérisé en ce que** l'élément de filtre (34) est disposé dans la région des extrémités (26, 32) et est réalisé sous forme de disque annulaire (34), qui est poussé sur l'extrémité (26) de l'élément d'entrée de gaz (24) et qui recouvre au moins sensiblement la section transversale d'écoulement de l'extrémité (32) de l'élément de sortie de gaz (30).

8. Dispositif (2) selon la revendication 6, **caractérisé en ce que** l'élément de filtre (34) est disposé dans la région des extrémités (26, 32) et est réalisé sous forme de pot (34) qui est poussé sur l'extrémité (26) de l'élément d'entrée de gaz (24) et qui recouvre la section transversale d'écoulement des extrémités (26, 32).

9. Dispositif (2) selon l'une quelconque des revendications 1 à 8, **caractérisé en ce que** l'élément de filtre (34) est réalisé sous forme de tamis (34).

10. Dispositif (2) selon la revendication 9, **caractérisé en ce que** le tamis (34) présente une largeur de mailles comprise entre 50 µm et 1,5 mm.

11. Dispositif (2) selon l'une quelconque des revendications 1 à 10, **caractérisé en ce que** l'élément de filtre (34) se compose d'un matériau résistant à la corrosion.
